# EUROPÄISCHE PATENTSCHRIFT

(11) **EP 2 638 536 B1**
(45) Veröffentlichungstag und Bekanntmachung des Hinweises auf die Patenterteilung: **25.02.2015**
(21) Anmeldenummer: 11778898.4
(22) Anmeldetag: 04.11.2011
(51) Int. Cl.: G09B 21/00

(54) **TEXTILWARE MIT AUFGESTICKTER BLINDENSCHRIFT**
FABRIC WITH EMBROIDED BRAILLE
TISSUS AVEC DE BRAILLE BRODER

(30) Priorität: 10.11.2010 DE 202010008998 U
(43) Veröffentlichungstag der Anmeldung: 18.09.2013
(73) Patentinhaber: Kampmann GmbH, 33649 Bielefeld (DE)
(72) Erfinder: KAMPMANN, Jürgen, 33649 Bielefeld (DE)
(74) Vertreter: Dantz, Jan Henning
(86) Internationale Anmeldenummer: PCT/EP2011/069452
(87) Internationale Veröffentlichungsnummer: WO 2012/062661

(56) Entgegenhaltungen:
- GB-A- 1 549 628
- JP-A- 9 209 256

## Beschreibung

Die vorliegende Erfindung betrifft eine Textilware gemäß dem Oberbegriff des Anspruchs 1.

Um blinden oder stark sehbehinderten Menschen zu ermöglichen, Textilwaren, insbesondere Bekleidungsstücke hinsichtlich ihrer Farbe, Größe, Zugehörigkeit oder auch hinsichtlich ihrer Waschbarkeit oder Ähnlichem voneinander zu unterscheiden, ist es aus der DE 203 07 854 U1 bekannt, auf der Innenseite des Bekleidungsstücks eine Schutzhülle zu befestigen, in der ein Schriftträger mit Informationen über Eigenschaften des Bekleidungsstücks in Blindenschrift eingelegt ist. Der in die Schutzhülle eingelegte Schriftträger besteht dabei beispielsweise aus einem Kunststoff oder einem Metall oder auch aus gepressten, verklebten oder verwobenen Naturfasern. Bekannt ist aus dieser Schrift auch, die Blindenschrift in den Schriftträger einzuprägen oder einzustanzen oder auch durch Beschichtung des Schriftträgers mit erhärtenden Stoffen durch Kleben oder Löten einzelner Punkte oder auch durch Aufsticken kleiner Perlen auf den Schriftträger aufzubringen.

Nachteilig ist, dass solche in Schutzhüllen eingebrachten Schriftträger aus der Schutzhülle herausfallen können oder nach Herausnahme in die Schutzhülle eines anderen Bekleidungsstücks eingelegt werden, dessen Beschaffenheit nicht der auf dem Schriftträger enthaltenen Informationen entspricht. Außerdem verringern sowohl die Schutzhülle als auch der mitunter aus hartem Material bestehende Schriftträger oder Schriftzeichen den Tragekomfort des Bekleidungsstücks.

Aufgabe der vorliegenden Erfindung ist es, eine Textilware mit haptisch erfassbaren Informationen bereitzustellen, welche unverlierbar an der Textilware angebracht sind und den Tragekomfort der Textilware nicht beeinträchtigen.

Diese Aufgabe wird durch eine Textilware mit den Merkmalen des Anspruchs 1 gelöst.

Erfindungsgemäß ist der Informationsträger der Textilware als auf einer Basisstoffschicht der Textilware aufgebrachte Stickerei von Blindenschrift-Punkten ausgebildet, wobei die Stickerei mehrlagig ausgebildet ist und aus einer ersten Lagebesteht, die als auf der Basisstoffschicht aufgestickter, sternförmiger Stickstich ausgebildet ist und einer zweiten Lage, die als eine die erste Lage überdeckende, auf der Basisstoffschicht und/oder der ersten Lage aufgestickte erste Deckstichlage ausgebildet ist.

Durch die als Stickerei ausgebildeten Blindenschrift-Punkte auf der Textilware ist eine eindeutige und unverlierbare Textilware, beispielsweise ein Bekleidungsstück oder eine Stofftasche ermöglicht, die im Falle der Anbringung auf einer als Kleidungsstück ausgebildeten Textilware zugleich angenehm auf der Haut zu tragen ist.

Durch das Übereinanderschichten mehrerer Lagen von Stickereien ist eine zuverlässige Ertastung der einzelnen Blindenschrift-Punkte ermöglicht.

Vorteilhafte Ausgestaltungen der Erfindung sind Gegenstand der Unteransprüche.

Gemäß einer vorteilhaften Ausführungsvariante ist die zweite Lage der Stickerei durch eine weitere dritte Deckstichlage überdeckt, wobei die zweite Lage und die dritte Lage verschränkt übereinander aufgestickt sind.

Um eine zuverlässige Ertastbarkeit der Stickerei von Blindenschrift-Punkte auch auf Florgewebe, wie Samt und Frottiergewebe oder auch Maschenware wie Strickware zu gewährleisten, ist gemäß einer bevorzugten Ausführungsvariante zwischen der Basisstoffschicht und der Stickerei von Blindenschrift-Punkten eine gestickte Steppstichfläche vorgesehen. Diese Steppstichfläche zeichnet sich durch eine glatte Fläche aus, so dass die auf dieser Steppstichfläche aufgestickten Blindenschrift-Punkte leicht ertastbar sind.

Gemäß einer weiteren bevorzugten Ausführungsvariante ist neben der Stickerei von Blindenschrift-Punkten auf der Basisstoffschicht eine dem inhaltlichen Sinn der Stickerei von Blindenschrift-Punkten entsprechende Schwarzschriftstickerei aufgestickt, um die auf der Textilware in Blindenschrift-Punkten aufgebrachte Information auch für sehschwache Menschen mit einem Restsehvermögen visuell lesbar zur Verfügung zu stellen.

Nachfolgend werden Ausführungsbeispiele der Erfindungen anhand der beiliegenden Zeichnungen näher erläutert. Es zeigen:
- Fig. 1: eine schematische Draufsicht auf ein Textilstück mit darauf aufgebrachten Blindenschrift-Punktstickereien,
- Fig. 2: eine schematische Ansicht einer Basisstoffschicht mit nebeneinander angeordneten unterschiedlichen Fertigungsschritten der Blindenschrift-Punkte,
- Fig. 3: eine Seitenschnittansicht der Textilware entlang eines mit III markierten Schnittes in Figur 2 und
- Fig. 4: eine schematische Ansicht einer Textilware mit einer beispielsweise als Frottierware ausgestalteten Basisstoffschicht und einer Steppstichfläche als Unterlage für die Stickerei von Blindenschrift-Punkten.

In der nachfolgenden Figurenbeschreibung beziehen sich Begriffe oben, unten, links, rechts, vorne, hinten usw. ausschließlich auf die in den jeweiligen Figuren gewählte beispielhafte Darstellung und Position der Textilware, Stickerei und dergleichen. Diese Begriffe sind nicht einschränkend zu verstehen, d.h. durch verschiedene Arbeitsstellungen oder dergleichen können sich diese Bezüge verändern.

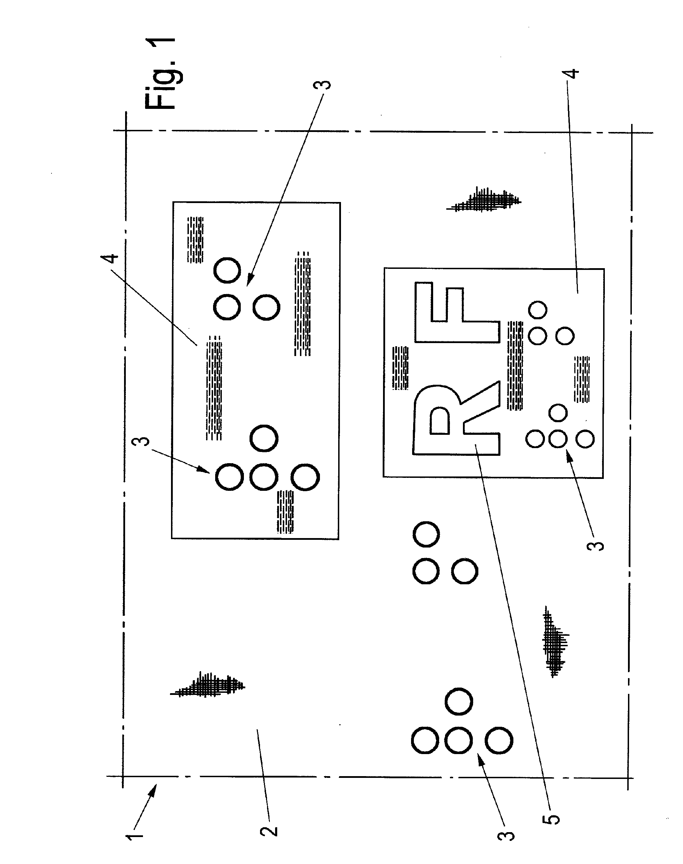

In Figur 1 ist mit dem Bezugszeichen 1 insgesamt eine Textilware bezeichnet. Diese Textilware 1 weist eine Basisstoffschicht 2 auf, beispielsweise in Form eines Gewebes oder einer Maschenware, auf der eine Stickerei 3 von Blindenschrift-Punkteaufgestickt ist. Die Stickerei 3 von Blindenschrift-Punktekann dabei sowohl direkt auf der Basisstoffschicht 3 aufgebracht werden als auch auf einer auf der Basisstoffschicht 2 aufgestickten Steppstichfläche 4, wobei die Steppstichfläche 4 insbesondere dann Verwendung findet, wenn die Basisstoffschicht 2 aus einem unruhigen Gewebe oder Maschenware wie Strick, einem Frottierstoff, einer Pikeeware, Samt oder Kord besteht, in dem die Blindenschrift-Punkte nicht erhaben genug aus der Restfläche des Textils hervortreten würden und so für einen Blinden nur schwer zu ertasten wären.

Des Weiteren sind gemäß einer besonderen Ausführungsvariante der erfindungsgemäßen Textilwaren neben den Stickereien von Blindenschrift-Punkte auch eine dem inhaltlichen Sinn der Stickerei 3 von Blindenschrift-Punkte entsprechende Schwarzschriftstickerei 5 aufgestickt, um Personen mit einem Restsehvermögen die in der Blindenschriftstickerei enthaltene Information in visuell lesbarer Schrift anzubieten.

Die Stickerei 3 von Blindenschrift-Punkten ist vorzugsweise um mindestens 0,4 mm über der Stoffoberfläche der Basisstoffschicht 2 erhaben ausgebildet, um damit die Mindestanforderungen an "Schrifthöhe" zur Lesbarkeit der Blindenschrift zu gewährleisten.

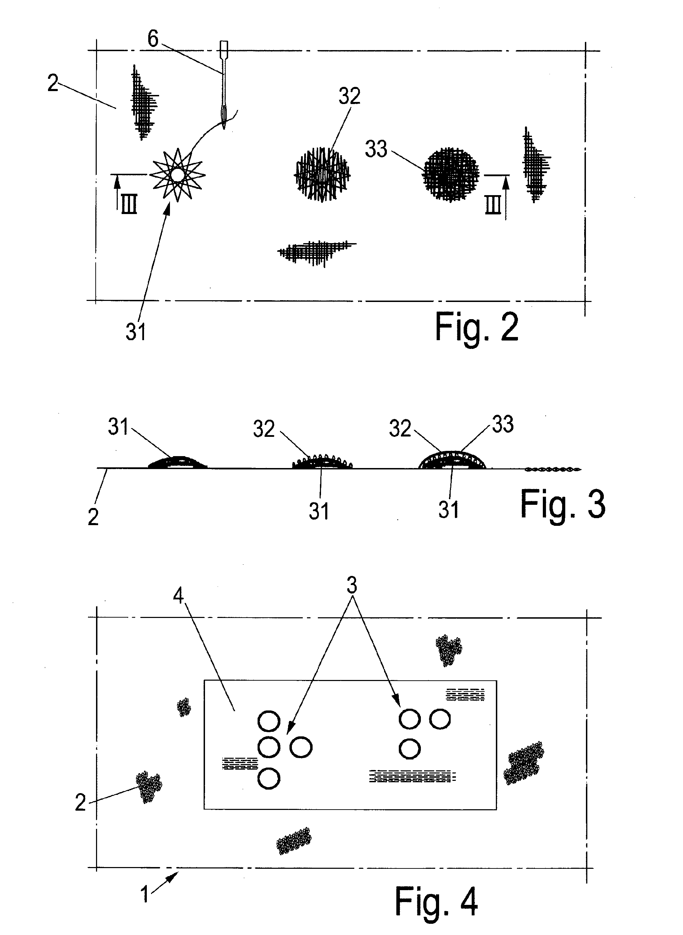

Der Aufbau der einzelnen Blindenschrift-Punkte ist in Figur 2 und 3 dargestellt. Bei der Herstellung der Stickerei 3 der Blindenschrift-Punkte wird mit einem Stickwerkzeug 6 zunächst in einem ersten Herstellungsschritt bevorzugt ein sternförmiger Stickstich 31 auf die Basisstoffschicht 2 aufgestickt, um eine erhabene Mitte des zu stickenden Blindenschrift-Schriftpunktes zu erzeugen. Im zweiten Herstellungsschritt wird der Stickstich durch Aufsticken einer ersten Deckstichlage 32 von Stickstichen überdeckt. Bevorzugt wird diese erste Deckstichlage 32 in einem weiteren Herstellungsschritt durch Aufsticken einer zweiten Deckstichlage 33 von Stickstichen auf die erste Deckstichlage 32 überdeckt, wobei die zweite Lage 32, sprich die erste Deckstichlage, und die dritte Lage 33, sprich die zweite Deckstichlage, verschränkt zueinander aufgestickt sind.

Die so erzeugten Blindenschrift-Punkte sind dabei bevorzugt als Braille-Schrift angeordnet.

Durch die aufgestickten Blindenschrift-Punkte ist eine einfache Differenzierung von Bekleidung und Wäsche, beispielsweise im Sportunterricht von Blindenschulen, in den Haushalten von nichtsehenden Menschen, in Heimen oder in therapeutischem Einsatz ermöglicht. Des Weiteren sind durch die aufgestickten Blindenschrift-Punkte an Blinde gerichtete Werbebotschaften in einfacher Weise auf einer Textiloder Lederware aufbringbar.

### Bezugszeichenliste

- 1: Textilware
- 2: Basisstoffschicht
- 3: Blindenschrift-Punkte
- 4: Steppstichfläche
- 5: Schwarzschriftstickerei
- 6: Stickwerkzeug
- 31: erste Lage
- 32: zweite Lage
- 33: dritte Lage

## Patentansprüche

1. Textilware (1), aufweisend eine Basisstoffschicht (2) und einen haptisch erfassbaren Informationen enthaltenden als auf der Basisstoffschicht (2) aufgebrachte Stickerei (3) von Blindenschrift-Punkten ausgebildeten Informationsträger, **dadurch gekennzeichnet, dass** die Stickerei (3) mehrlagig ausgebildet ist, wobei eine erste Lage (31) der Blindenschrift-Punkte (3) als auf der Basisstoffschicht (2) aufgestickter sternförmiger Stickstich ausgebildet ist und eine zweite Lage (32) der Blindenschrift-Punkte (3) als eine die erste Lage (31) überdeckende, auf der Basisstoffschicht (2) und/oder der ersten Lage (31) aufgestickte erste Deckstichlage ausgebildet ist.

2. Textilware (1) nach Anspruch 1, **dadurch gekennzeichnet, dass** eine dritte Lage (33) der Blindenschrift-Punkte (3) als auf der Basisstoffschicht (2) und/oder der ersten und/oder der zweiten Lage (31, 32) aufgestickte und die zweite Lage (32) überdeckende zweite Deckstichlage ausgebildet ist, wobei die zweite Lage (32) und die dritte Lage (33) verschränkt übereinander aufgestickt sind.

3. Textilware (1) nach einem der vorstehenden Ansprüche, **dadurch gekennzeichnet, dass** zwischen der Basisstoffschicht (2) und der Stickerei von Blindenschrift-Punkte (3) eine gestickte Steppstickfläche (4) vorgesehen ist.

4. Textilware (1) nach einem der vorstehenden Ansprüche, **dadurch gekennzeichnet, dass** die Stickerei von Blindenschrift-Punkte (3) eine Erhabenheit von mindestens 0,4mm aufweist.

5. Textilware (1) nach einem der vorstehenden Ansprüche, **dadurch gekennzeichnet, dass** die Blindenschrift-Punkte (3) so angeordnet sind, dass sie als Braille- Schrift lesbar sind.

6. Textilware (1) nach einem der vorstehenden Ansprüche, **dadurch gekennzeichnet, dass** neben der Stickerei von Blindenschrift-Punkte (3) auf der Basisstoffschicht (2) eine dem inhaltlichen Sinn der Stickerei von Blindenschrift-Punkte (3) entsprechende Schwarzschrift-Stickerei (5) aufgestickt ist.

## Claims

1. A textile (1), comprising a main material layer (2) and an information carrier, which contains haptically detectable information and is arranged as an embroidery (3) made of Braille dots which is applied to the main material (2), **characterized in that** the embroidery (3) has a multi-ply design, wherein a first ply (31) of the Braille dots (3) is arranged as a star-shaped stitching that is stitched onto the main material layer (2), and a second ply (32) of the Braille dots is arranged as a first cover stitching ply that covers the first ply (31) and is stitched onto the main material layer (2) and/or the first ply (31).

2. A textile (1) according to claim 1, **characterized in that** a third ply (33) of the Braille dots (3) is arranged as a second cover stitching ply which is stitched onto the main material layer (2) and/or the first and/or the second ply (31, 32), wherein the second ply (32) and the third ply (33) are stitched on above one another in an interlacing manner.

3. A textile (1) according to one of the preceding claims, **characterized in that** a stitched lock-stitch area (4) is provided between the main material layer (2) and the embroidery of Braille dots (3).

4. A textile (1) according to one of the preceding claims, **characterized in that** the embroidery of Braille dots (3) has an elevation of at least 0.4 mm.

5. A textile (1) according to one of the preceding claims, **characterized in that** the Braille dots (3) are arranged in such a way that they are readable as Braille printing.

6. A textile (1) according to one of the preceding claims, **characterized in that** a black printing embroidery (5) is stitched onto the main material layer (2) adjacent to the embroidery of Braille dots (3), said black printing embroidery corresponding with respect to its meaning to the embroidery of the Braille dots (3).

## Revendications

1. Produit textile (1) comprenant une couche textile de base (2) et un support d'informations réalisé sous la forme d'une broderie (3) de points de braille appliquée sur la couche textile de base (2) et comprenant des informations détectables de façon haptique, **caractérisé en ce que** la broderie (3) est formée de multiples couches, dans laquelle une première couche (31) de points de braille (3) se présente sous la forme d'un point de broderie en forme d'étoile brodé sur la couche textile de base (2) et une deuxième couche (32) de point de braille (3) se présente sous la forme d'une première couche de point de recouvrement brodée sur la couche textile de base (2) et/ou la première couche (31), et recouvrant la première couche (31).

2. Produit textile (1) selon la revendication 1, **caractérisé en ce qu'**une troisième couche (33) de points de braille (3) est réalisée sous la forme d'une deuxième couche de point de recouvrement brodée sur la couche de textile de base (2) et/ou sur la première et/ou la deuxième couche (31, 32) et recouvrant la deuxième couche (32), la deuxième couche (32) et la troisième couche (33) étant brodées l'une sur l'autre en s'entrecroisant.

3. Produit textile (1) selon l'une quelconque des revendications précédentes, **caractérisé en ce qu'**une surface à point de navette (4) brodée est présente entre la couche de textile de base (2) et la broderie de points de braille (3).

4. Produit textile (1) selon l'une quelconque des revendications précédentes, **caractérisé en ce que** la broderie de points de braille (3) présente des parties saillantes d'au moins 0,4 mm.

5. Produit textile (1) selon l'une quelconque des revendications précédentes, **caractérisé en ce que** les points de braille (3) sont disposés de telle manière qu'ils peuvent être lus en tant qu'écriture braille.

6. Produit textile (1) selon l'une quelconque des revendications précédentes, **caractérisé en ce qu'**une broderie en caractères d'imprimerie (5) correspondant au sens du contenu de la broderie de points de braille (3) est brodée en plus de la broderie de points de braille (3) sur la couche de textile de base (2).
